# EUROPEAN PATENT APPLICATION

(11) **EP 1 509 043 A1**
(43) Date of publication of application: **23.02.2005**
(21) Application number: 03019080.5
(22) Date of filing: 22.08.2003
(51) Int. Cl.: H04N 7/24, H04H 1/00, H04L 1/18, H04B 1/16

(54) **Repeated transmission of DVB-H bursts**

(71) Applicant: MATSUSHITA ELECTRIC INDUSTRIAL CO., LTD., Kadoma-shi, Osaka 571-8501 (JP)
(72) Inventor: Scheid, Albrecht, 63225 Langen (DE)
(74) Representative: Grünecker, Kinkeldey, Stockmair & Schwanhäusser Anwaltssozietät

(57) **Abstract**

The present invention transmits DVB-H bursts twice within the DVB-T transmission scheme on a transmission channel. The repetitive transmission of complete or partial bursts reduces the switching time to a new transmission channel and increases the robustness against transmission errors.

## Description

The present invention relates to a method for transmitting and a method for receiving all kind of data, for example encoded video data on/from a transmission channel and a corresponding transmitter and receiver. Particularly, the present invention relates to a transmission of video data over a transmission channel wherein the video data is transmitted in form of bursts.

Broadcast transmission systems for the transmission of digital video data have been standardized for different transmission paths. The standard DVB-S is directed to a satellite based broadcast, the standard DVB-C to a cable transmission and the standard DVB-T to terrestrial broadcasting. The terrestrial broadcasting transmission system DVB-T is intended for a broadcast system targeting receivers at homes, offices, cars, etc. The DVB-T system is also suited for reception by mobile receivers, even at high driving speeds. However, mobile hand-held devices impose further limitations due to a limited battery capacity and due to an extremely challenging heat dissipation in a miniaturized environment.

A new DVB transmission standard DVB-H currently being under development is purposed for small, pocketable terminals which are battery operated. These terminals could be small hand-held devices such as mobile phones and provide reception inside buildings and cars.

The forthcoming DVB-H standard is based on the existing terrestrial broadcasting transmission system DVB-T. While a DVB-T transmission system usually provides a bandwidth of 10 Mbps or more, some services used in mobile hand-held terminals may require a relatively low bandwidth. The estimated maximum bit rate for streaming video using advance video compression techniques like MPEG-4 is around a few hundred kilobits per second. In view of the reduced average amount of data to be transmitted, DVB-H employs a time division multiplexing (TDM) transmission scheme. The DVB-H data are transmitted in time slices or bursts. Each burst uses a bit rate higher than the bit rate required when transmitting the data by a static bandwidth.

Between the bursts of one particular service, no data of that same service is transmitted. These intervals or off-times between the bursts allow other services to use the bandwidth. A receiver is thus enabled to only stay active for small proportions of the time, i.e. only when receiving bursts. During the off-times, the receiver may monitor neighboring transmission channels for other services.

The capability of such a burst-based transmission concept to enable a reduced power consumption at the receiving side is increased with large off-periods. The burst-based concept aiming to achieve a power saving of around 90% is based on off-times of around 5 seconds and on-times of less than 0.5 seconds.

The duration of the off-times in the order of 5 seconds results in correspondingly prolonged switching times between transmission channels. When switching to another transmission channel, an image will only be reproduced after having received a first burst. A user switching to another television channel needs to wait for the first burst transmitted on the new channel which may last for around 5 seconds. Hence, a fast scan through the programs broadcast on different television channels is not possible.

The DVB-H system will employ efficient error detection and correction mechanisms. However, the received burst data are error prone and are not correctable in case of fading channel conditions, in particular when approaching the borders of a DVB-H cell. An uncorrected burst will result in lost service data for around 5 seconds and video, audio or other contents cannot be reproduced for a corresponding time period.

It is the object of the present invention to provide an improved transmission scheme aiming to avoid the drawbacks of the current transmission approach.

This is achieved by the features of the independent claims.

Further embodiments are the subject matter of the dependent claims.

According to a first aspect of the present invention, a method for transmitting video, audio, text or data over a transmission channel is provided. The transmission channel transmits the video, audio, text or data in form of a plurality of bursts. The bursts are transmitted in intervals on said transmission channel. A first transmission of a burst is repeated within the interval following the first transmission of the burst.

According to another aspect of the present invention, a transmitter for transmitting video, audio, text or data over a transmission channel is provided. The transmission channel transmits video, audio, text or data in form of a plurality of bursts. The bursts are transmitted in intervals on said transmission channel. The transmitter repeats a first transmission of a burst within the intervals following the first transmission of the burst.

It is the particular approach of the present invention, to repeat the transmission of a burst which has already been transmitted. The repeated transmission is performed during the off-period following the first transmission of the burst.

This approach has the particular advantage to reduce the switching time for users when switching to a transmission channel. While the existing approaches require up to 5 seconds until first data, in particular video or audio data, can be received and reproduced, the present invention reduces the switching time by repeating the transmission of burst data during the off-periods among the transmission of subsequent bursts. A switch to another transmission channel, in particular a scan through a plurality of different channels, can thus be achieved in a more efficient manner and the user convenience can be increased accordingly.

It is a further advantage of the present invention that the robustness of the data transmission can be improved. As a video or audio data for a reproduction period of around 5 seconds is transmitted within short time slices of exemplary around 140 ms, a data loss results in a high impact on the perceived image quality, i.e. a reproduction failure of around 5 seconds. By transmitting the burst in a repetitive manner, a data loss can be corrected by accessing a repetitive transmission of the lost burst data.

According to a further aspect of the present invention, a method for receiving video, audio, text or data from a transmission channel is provided. The transmission channel transmits the video, audio, text or data in form of a plurality of bursts. The bursts are transmitted in intervals on the transmission channel. The method extracts the video, audio, text or data from the transmitted bursts. The transmission channel further comprises a repetitively transmitted burst within each interval following the first transmission of a burst. Upon switching to a transmission channel, the extraction step extracts a first received burst. The first received burst being either the first transmission of a burst or the repetitive transmission of said burst.

According to a further aspect of the present invention, a receiver for receiving video, audio, text or data from a transmission channel is provided. The transmission channel transmits video, audio, text or data in form of a plurality of bursts. The bursts are transmitted in intervals on said transmission channel. The receiver is adapted to extract the video, audio, text or data from the transmitted burst. The transmission channel further comprises a repetitively transmitted burst within each interval following the first transmission of a burst. The receiver being further adapted to extract a first burst received upon switching to said transmission channel. The first received burst being either the first transmission of a burst or the repetitive transmission of the burst.

It is the particular advantage of the present invention to enable receivers to fast switch to a new transmission channel and to avoid any inconvenience stemming from long waiting times for receiving a first video data burst. This is accomplished by repetitively transmitting each burst within the interval between the previously transmitted burst and the next transmitted burst.

According to a preferred embodiment of the present invention, the repetitive transmission of the burst has a fixed delay from the end of the first transmission. This enables receivers to directly power-up for receiving the repetitive transmission of the burst without the need to monitor the transmission channel continuously.

Preferably, the fixed delay is between 1 to 3 seconds, in particular between 2 and 2.5 seconds.

According to an alternative embodiment, each first transmitted burst includes a delay value indicating a time period from the end of the first transmission to the beginning of the transmission of the subsequent burst. In order to be able to extract the burst data of the repetitive transmission without monitoring the transmission channel at the receiving side, a delay of the start of the repetitive transmission is based on the delay value included in the first transmission of the burst. This enables each receiver to calculate the start time for extracting the repetitive transmission of the burst data without continuously monitoring the transmission channel.

Preferably, the calculation is performed based on a fixed calculation rule. Using a fixed rule enables each transmitter and receiver to calculate the start time for a repetitive burst data transmission. No further indication of a delay value is required in this respect to be included into a first burst data transmission.

Preferably, the delay between the end of the transmission of the first burst and the start of the repetitive transmission is a fixed proportion of the delay value between two consecutive bursts.

According to a preferred embodiment, each repetitively transmitted burst includes a further delay value. The further delay value indicates a delay between the end of a repetitive transmission of a burst and the start of a first transmission of a subsequent burst. This transmission scheme advantageously avoids any monitoring of a transmission channel after having switched to a transmission channel and first extracted a repetitively transmitted burst. The further delay value transmitted together with the repetitively transmitted burst indicates the time difference between the end of the repetitive burst and the start of the following (new) burst. Hence, a receiver is enabled to definitively power-up for the following first transmission of a subsequent burst.

Alternatively, the repetitively transmitted burst also includes the delay value included in the first transmission of a burst, which indicates the duration between the first transmission of the current burst and a first transmission of the subsequent burst. The receiver may then extract the delay value and calculate therefrom the remaining delay between the repetitive transmission and the start of the subsequent burst. The remaining delay can be easily calculated based on the total duration of the off-time between two subsequent bursts and the known burst duration.

Preferably, each repetitively transmitted burst includes an indication indicating that this burst is a repetitive transmission. When employing a fixed scheme for transmitting bursts, the receiving side will be in a position to definitely power-up for the next first transmission of a burst - even when first receiving a repetitively transmitted burst.

Preferably, this indication is included into the TPS bits of a burst, most preferably included into bit s48 in accordance with the DVB-specification.

Other embodiments and advantages of the present invention will become more apparent from the following description of preferred embodiments, in which:
- Fig. 1: schematically illustrates the transmission of video, audio, text or data in form of bursts;
- Fig. 2: schematically illustrates the transmission of additional bursts in the transmission channel in accordance with the present invention;
- Fig. 3: schematically illustrates an alternative insertion position of repetitively transmitted bursts;
- Fig. 4: illustrates the transmission channel employed for transmitting two different services in a time division multiplex (TDM) manner;
- Fig. 5: illustrates in a block diagrammatical form the configuration of a transmitter;
- Fig. 6: illustrates in a block diagrammatical form the configuration of a receiver;
- Fig. 7 and Fig. 8: are flow charts schematically illustrating the transmission procedure in accordance with the present invention ; and
- Fig. 9 and Fig. 10: are flow charts schematically illustrating a receiving procedure in accordance with the present invention;

The present invention relates to a modified transmission of DVB-H services in transmission channels currently in use for DVB-T services. DVB-T is one of the core DVB systems. The DVB systems further include the DVB-S satellite transmission standard, which is based on QPSK, and the DVB-C cable delivery mechanism, which is closely related to DVB-S. The DVB-T standard is based on COFDM (Coded Orthogonal Frequency Division Multiplex) and QPSK, 16 QAM and 64 QAM modulation.

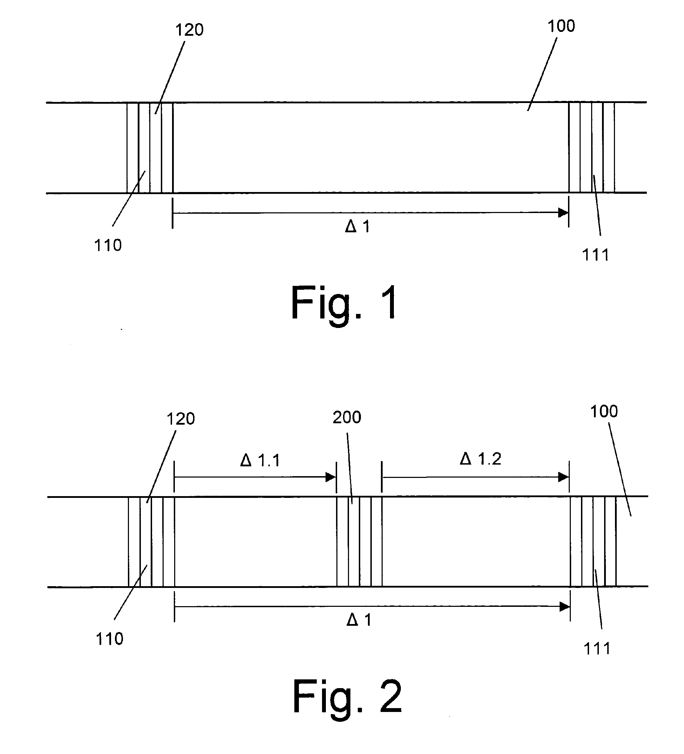

The new DVB-H data are transmitted within the DVB-T transmission channel 100, as illustrated in Fig 1. The DVB-H data are transmitted in time slices or bursts 110, 111 in a time division multiplexing (TDM) scheme. Each burst 110, 111 typically comprises around 2 Mbits (256 kBytes) of data. The burst duration needed for transmitting the burst data is exemplary around 140ms if the preferred 16-QAM constellation is used for modulation. Each burst contains video and/or audio and/or other data to bridge approximately 5 seconds, namely the off-time during which no burst data is transmitted. Depending on the internal bandwidth and amount of data transmitted within a burst, the burst duration, i.e. the time from the beginning to the end of a burst, may vary considerably. The burst duration is preferably calculated by dividing the burst size (in units of bits) by the burst bandwidth (in units of bits per second). A correction factor may be taken into account in order to compensate for an overhead caused by the transport packet headers of the DVB transmission scheme.

Between different data streams to be transmitted on said transmission channel, the burst parameters like burst size, burst duration, burst bandwidth and off-time may frequently vary.

In order to achieve synchronization between a transmitter and receiver, the receiver's clock is newly started every time a new burst is received. The receivers clock accuracy has to bridge a single off-time only.

The delay Δ1 between subsequent bursts i.e. the off-time or interval, is transmitted within each burst 110, 111. A receiver is consequently informed in advance when the next data packet, i.e. burst, is to be extracted from transmission channel 100. Due to the transmitted delay between subsequent bursts, a DVB-H receiver can be switched off in-between in order to achieve a reduced power consumption. A power-up is initiated around 250 ms before the reception of the subsequent burst is started. In this manner, a power saving of around 90% compared to a continuous reception scheme can be achieved.

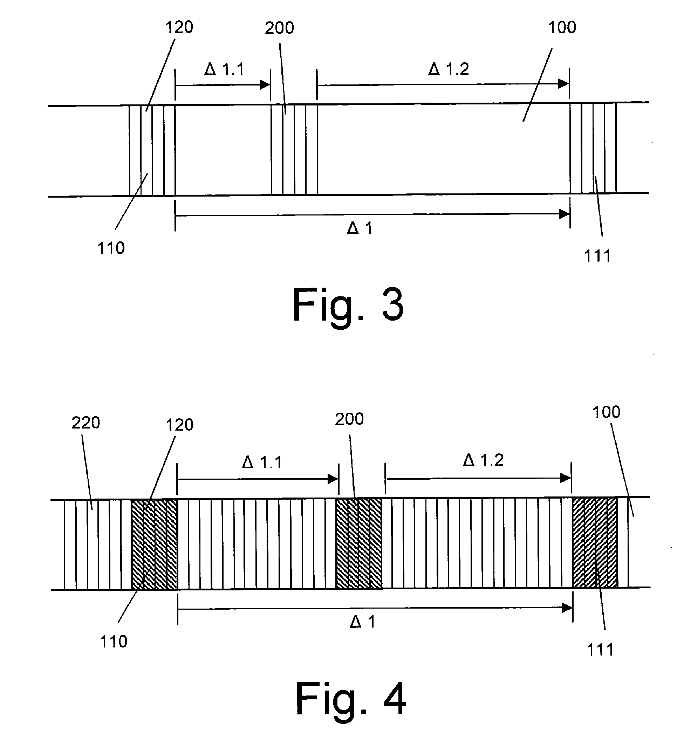

The inventive approach is illustrated in Fig. 2 and Fig. 3. As can be seen therefrom, the interval Δ1 between two consecutive bursts 110, 111 transmitted over the transmission channel 100 is used for a transmission of an additional burst 200. The data included in burst 200 correspond to those of the previous burst 110.

This repetitive transmission of burst data serves for two purposes. First, an increased robustness of the transmission channel against transmission errors, especially due to fading, can be achieved. Second, the interval Δ1 between two consecutive bursts 110, 111 is considerably reduced compared to a previous maximum off-time duration of around 5 seconds. A receiver switching to transmission channel 100 will on an average basis earlier receive a first burst, as a waiting for a first received burst which may correspond to the maximum off-time duration is avoided.

When switching to transmission channel 100, a receiver will extract the video, audio, text or data from the first received burst, either burst 110 or burst 200. After having received the first burst, the receiver only extracts video, audio, text or data from the "original" transmission of subsequent bursts 110, 111. Only under particular circumstances, especially upon occurrence of transmission errors, the repetitively transmitted burst 200 is additionally extracted in order to obtain the lost video, audio, text or data. By such an additional transmission, a considerably improved error concealment is enabled resulting in increased viewer convenience.

The insertion of an additional burst 200 in the interval Δ1 between two existing bursts 110, 111 results in two new delay values Δ1.1 and Δ1.2 which are shown in Figs. 2 and 3. The first delay value Δ1.1 represents the interval between the end of the first transmission of a burst 110 and the start of the repetitive transmission of the burst 200. Correspondingly, the delay value Δ1.2 indicates the time period between the end of burst 200 and the start of burst 111.

In case the burst 110 carries real-time data such as video data for immediate display, there is no need to repeat the whole burst 110 in the additional burst 200. It only needs to carry the later part of the video, audio, text or data from the burst 110 to bridge the time until the burst 111 is transmitted, because the time for reproducing the earlier part of the burst is elapsed at the time of reception of the burst 200.

If the burst 200 is transmitted in the middle between burst 110 and 111, then half the video frames are sufficient to bridge the time to the next burst 111. In this case, half of the bandwidth for the additional burst 200 is required, compared to transmission of the whole copy of burst 110. Optionally, this burst 200 can be processed and transmitted with a more robust error protection.

However, in case of non-real-time transmission, if the whole video event is transmitted off-line, stored completely in the receiver and presented to the viewer on demand, then the preferred method is to copy the whole burst 110 into the additional burst 200.

It is to be noted that the present invention is not restricted to the transmission of video data. It is obvious to a skilled person that all other kinds of data or services can be transmitted together with or instead of the video data. For instance, the bursts may be employed to transmit text data together or separately from the video data. The transmission capacity for the text may be used for providing a TV chat service. A TV audience may send their texts via SMS, email etc. and the text message will then broadcast via TV shortly thereafter, either on a local or on a nationwide basis.

The insertion position of burst 200 within the interval Δ1 may freely vary as shown by two different example insertion position of Fig. 2 and Fig. 3.

In order to enable considerable power savings at the receiving side when employing the present invention, the receiving side needs to be informed in advance of the transmission start time of the additional burst 200. For this purpose, different approaches may be used.

According to a first approach, the first transmitted burst 110 includes an additional delay value Δ1.1 indicating the start of a burst 200. Based on this indication, the data of burst 200 can be extracted in a power saving manner.

According to a second approach, the start time, i.e. delay value Δ1.1, is calculated based on delay value Δ1 which indicates the off-time duration between two subsequent "first" transmitted bursts 110, 111. When employing a fixed calculation rule to derive the delay value Δ1.1 from delay value Δ1, the start of burst 200 can always be calculated in a reliable manner without explicitly transmitting the respective delay value Δ1.1. Preferably, delay value Δ1.1 is a fixed proportion of delay value Δ1, for instance, 1/2, 1/3, 2/5, etc. Any appropriate proportion can be used for this purpose.

The second delay value Δ1.2 between the end of burst 200 and the start of burst 111 can be used by the receiving side when switching to a new transmission channel. In order to immediately synchronize to the "first" transmissions of the following bursts 110, 111 after having first received burst 200, delay value Δ1.2 indicates the off-time between burst 200 and burst 111. Different approaches may be used for obtaining delay value Δ1.2 corresponding to those described in connection delay value Δ1.1.

First, delay value Δ1.2 can be included into the data transmitted by burst 200.

Second, the delay value Δ1.2 may be derived from the fixed transmission configuration of burst 200 with both adjacent bursts 110, 111. Burst 200 may either always have a fixed distance with respect to the subsequent burst 111, or may be transmitted together with the video data in burst 200. Based on the above mentioned fixed calculation rules for obtaining delay Δ1.1, the remaining delay Δ1.2 can be calculated when taking the burst duration into account.

In order to enable a receiver to distinguish between a "first" transmission of a burst 110, 111 and a "second" or "repetitive" transmission of burst 200, the repetitively transmitted bursts include a corresponding indication signaling its transmission status. The indication signal indicates to a receiving site whether a burst has been transmitted as a first or a repetitive transmission. Based on this burst or transmission type indication, a delay value accompanying the transmitted video data can be correctly interpreted to achieve the respective delay value (Δ1 or Δ1.2).

For the signaling of a repetitively transmitted burst, the Transmission Parameter Signaling (TPS) bits are used. Only a single bit is required for this purpose, for instance, bit s48 as described in the DVB-T specification, EN300744, ver. 1.4.1.

By setting bit s48 to zero during the first transmission of a current transmission, the "original" transmission of video data can be indicated. A repeated transmission of a current burst, i.e. a copy of the first transmission, can be indicated by setting bit s48 to 1 (or vice versa). If the transmission time of a single burst requires more time than a single appearance of TPS bit s48, which is repeated around every 70ms, the value of bit s48 is repeated in the next (OFDM-) frames during the whole burst or is alternatively sent once at the beginning of a burst.

The video data of the DVB-H bursts 110, 111, 200 are transmitted together with other video data in the form of time slices 120, 220. DVB-H data can be transmitted on the same channels employed for DVB-T transmissions. While time slices 220 are employed for transmitting audio, video and other service data, the time slices 120 are independently used to transmit video, audio and other services. The bursts 110, 111, 200 are inserted within the continuous sequence of DVB-T services. An example illustrating the time multiplex transmission of different data services is illustrated in Fig. 4.

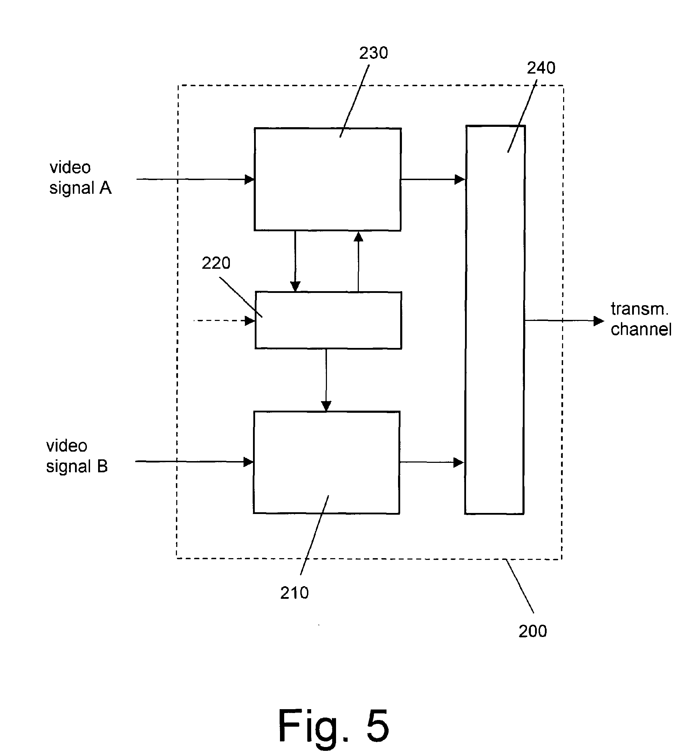

Referring to Fig. 5, a transmitter for broadcasting independent video signals A and B on the same transmission channel is illustrated. The configuration of the transmitter 200 comprises a first video processing unit 210 (a DVB-H processing unit), a second video processing unit 230 (a DVB-T processing unit), a calculation unit 220 and a multiplexer 240.

Video processing units 210 and 230 receive video signals A and B, respectively. Preferably, the video signals are provided in the form of MPEG transport streams. Video processing units 210 and 230 prepare the input data for transmission on transmission channel 100. For this purpose, video processing units 210 and 230 output the processed video signals to multiplexer 240 for inserting the video data in a time divisional multiplex (TDM) manner on the transmission channel.

The calculation unit 220 receives the off-time or delay value Δ1 either externally or from video processing unit 230. The calculation unit 220 derives therefrom the start time for the next "first" burst of transmission. In addition, calculation unit 220 determines the start time for the repetitively transmitted burst. This start time is calculated based on a predefined rule that is preferably based on delay value Δ1. The respective start times can also be forwarded to video processing unit 210 and/or multiplexer 240 in order to control the time division multiplex insertion on the terrestrial channel adapter (refer to EN300744, figure 1).

Further, calculation unit 220 provides the respective delay value to be included into the repetitively transmitted bursts or, alternatively, to be included into each transmitted burst.

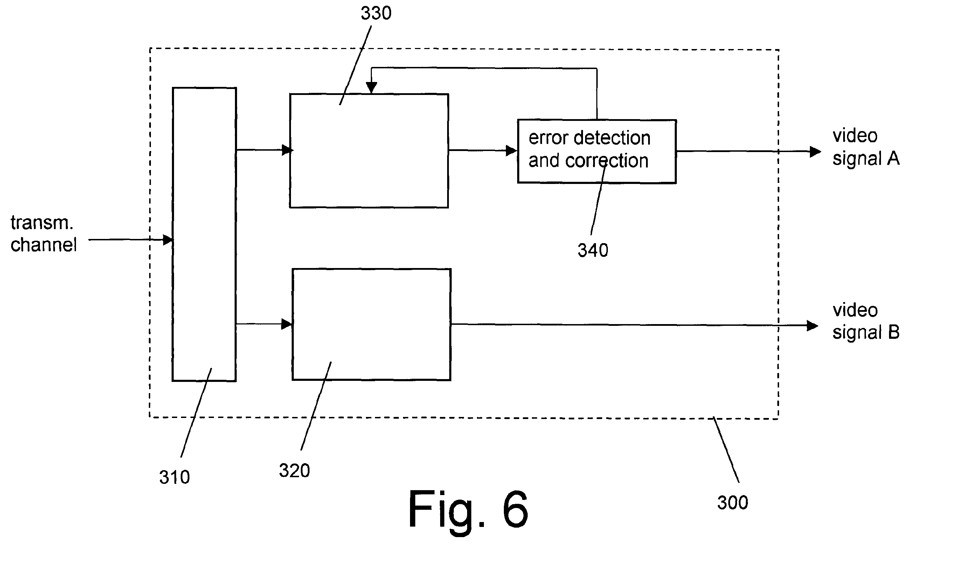

A possible configuration of a combined DVB-T/DVB-H receiver is illustrated in Fig. 6. Receiver 300 comprises a demultiplexer 310, a first processing unit 320, a second processing unit 330 and an error detection and correction unit 340. The signals from transmission channel 100 are distributed to both processing units 320 and 330 in accordance with the employed TDM transmission scheme by demultiplexer 310. Processing unit 320 is preferably a DVB-T processing unit while processing unit 330 a DVB-H processing unit is.

Each of the processing units 320, 330 extracts the video data from the transmitted time slots. The output video signals of the DVB-H processing unit 330 are checked for the occurrence of errors during transmission by error detection and correction unit 340. In case an error is detected, processing unit 330 extracts the repetitively transmission of the previously received burst 200 in order to accomplish an improved error concealment and to avoid a data loss for an off-time of up to five seconds.

Although processing unit 330 and error detection and correction unit 340 are illustrated as being separate processing components, both tasks may be integrated into a single component. The separation illustration of the error detection and correction unit is intended for the sake of clarity.

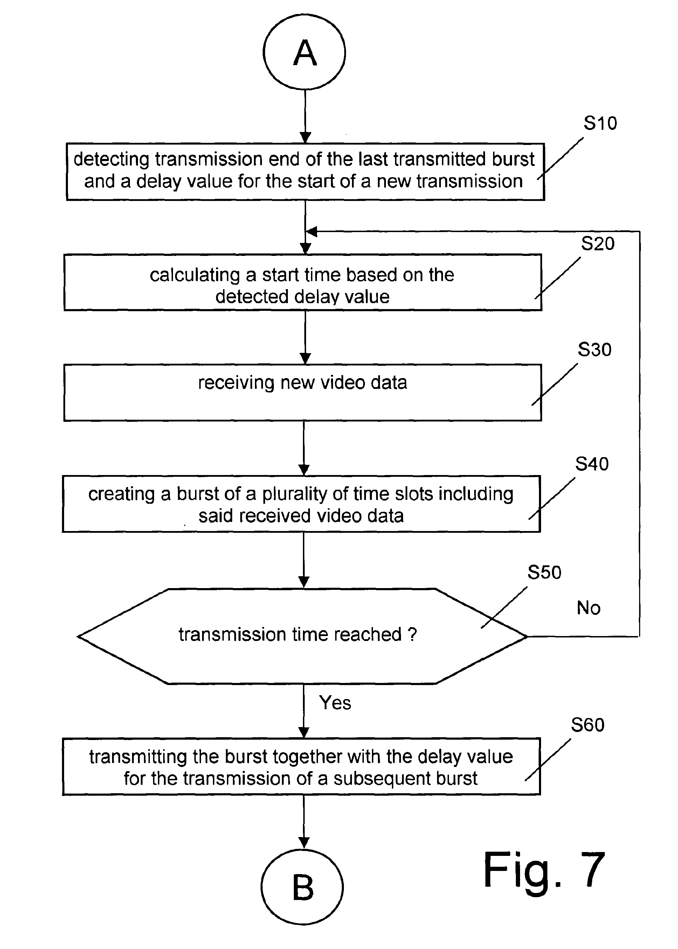

Referring to Figs. 7 to 10, these flow charts illustrate the transmission procedure and the receiving procedure of the present invention. As can be seen from Fig. 7, first the transmission end of the last transmitted burst is detected (step S10). Further, a delay value is detected, indicating the start of the transmission of adjacent burst 111. The delay value indicates the off-time of video data to be bridged.

The transmission start time of the subsequent burst 110 is calculated in step S20. All video data to be bridged are accumulated in step S30 and a burst comprising the received video data is created therefrom (step S40). Upon reaching the transmission time (step S50) the accumulated video data are transmitted in form of a burst. The burst is transmitted together with the delay value indicating the transmission of the subsequent burst (step S60).

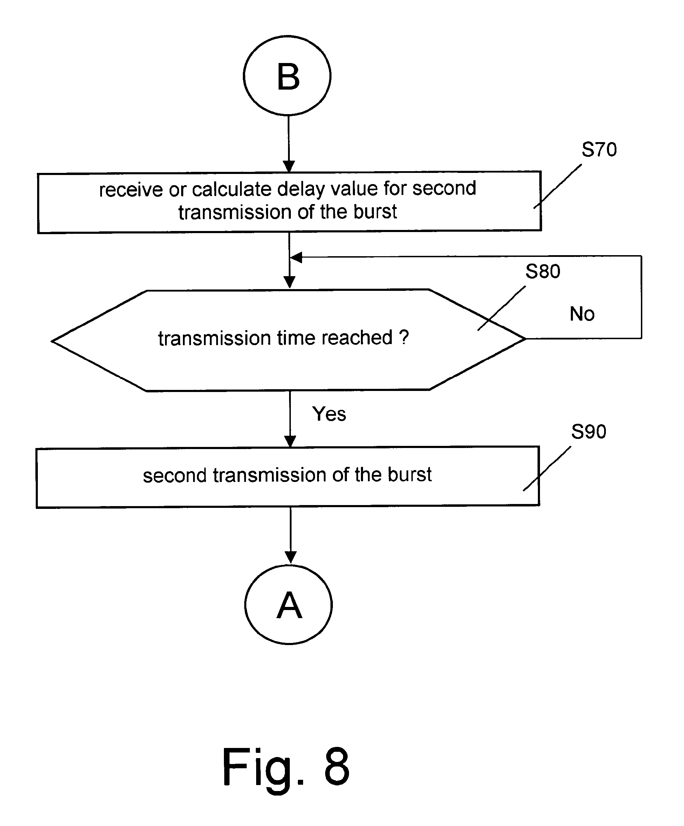

While these steps essentially describe the conventional transmission of bursts on transmission channel (100), Fig. 8 illustrates the additional steps for inserting repetitively transmitted bursts 200 into the interval between subsequent bursts transmitted in accordance with step S60.

After calculation of a respective delay value Δ1.1 for the repetitive burst transmission (step S70), the data of the previously transmitted burst is transmitted again (step S90) upon reaching the calculated transmission time (step S80). After transmission of the repetitive burst (step S90), the transmission procedure of a Fig. 8 returns to step S10, shown in Fig. 7.

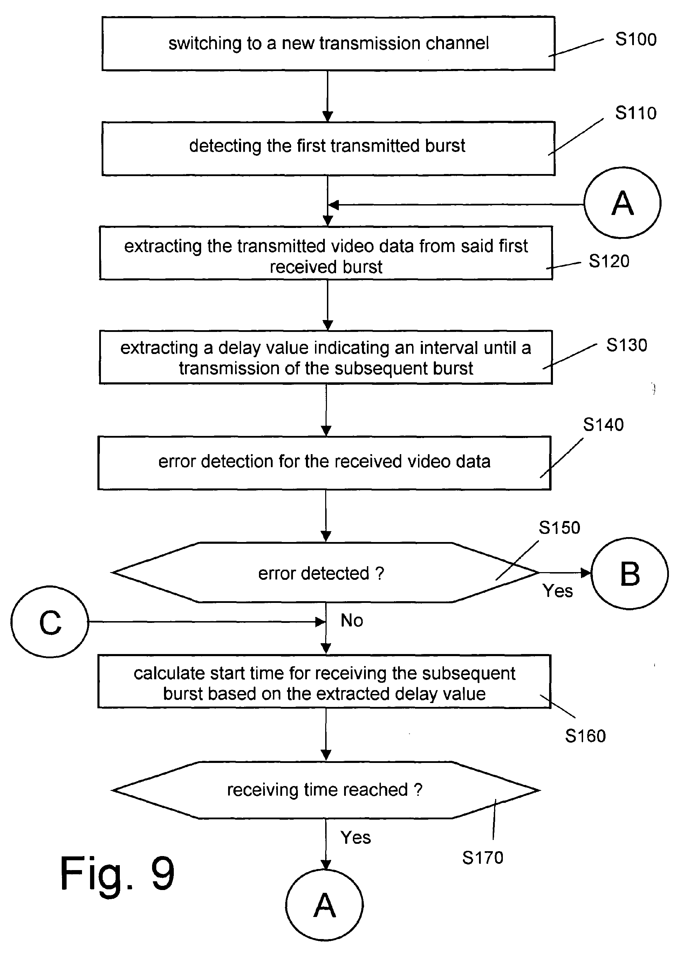

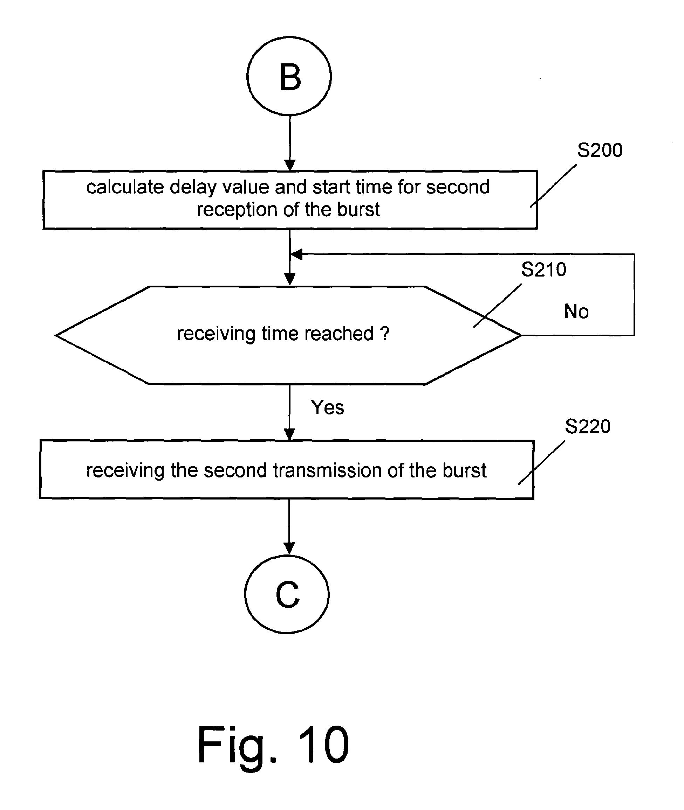

Figs. 9 and 10 relate to the corresponding receiving procedure. When switching to a new transmission channel (S100), the transmission channel 100 is monitored in order to detect a first transmitted burst (step S110). The video data of the detected burst are extracted (step S120). Further, the delay value included within the transmitted burst is further extracted (step S130).

After performing an error detection processing for the received video data (step S140), the start of the subsequent "first" transmitted burst is calculated based on the previously extracted delay value (step S160) in case no error is detected (step S150). Upon reaching the receiving time for the subsequent burst 111 (step S170), the receiving procedure is continued at step S120.

If an error is detected in step S150, the processing procedure further proceeds with the steps illustrated in Fig. 10. First, the respective delay value Δ1.1 and start time for the reception of the repetitively transmitted burst are calculated (step S200). Upon reaching the calculated receiving time (step S210), the second burst 200 is extracted (step S220) and the receiving procedure continues with step S160 for preparing a reception of the subsequent "first" transmitted burst 111.

In summary, the present invention transmits DVB-H bursts twice within the DVB-T transmission scheme on a transmission channel. The repetitive transmission of complete or partial bursts reduces the switching time to a new transmission channel and increases the robustness against transmission errors.

Particularly, the switching time to another transmission channel is accelerated when first receiving a shortened repetitively transmitted burst. The repetitively transmitted burst, carrying real-time video for immediate presentation on the display, is decoded and displayed such that the video data reproduction matches the approaching reception of the conventionally transmitted next burst.

## Claims

1. A method for transmitting video, audio, text or data over a transmission channel (100), said transmission channel (100) transmitting said video, audio, text or data in form of a plurality of bursts (110, 111) wherein said bursts (110, 111) are transmitted (S60) in intervals on said transmission channel (100)
**characterized by**
repeating (S90) a first transmission of a burst (200) within the interval following the first transmission of the burst (110).

2. A method according to claim 1, wherein said repetitively transmitted burst (200) only comprising a portion of the data of the first transmitted burst (110).

3. A method according to claim 2, wherein said data portion essentially corresponding to the duration of the interval between the repetitive transmission of the burst (200) and the first transmission of the subsequent burst (111).

4. A method according to any of claims 1 to 3, wherein said repetitive transmission step (S90) transmitting the burst (200) at a fixed delay (Δ1.1) after the first transmission of said burst (110).

5. A method according to claim 4, wherein said fixed delay (Δ1.1) being a period of 1 to 3 seconds, preferably a period of 2 to 2.5 seconds.

6. A method according to any of claims 1 to 5, wherein each first transmitted burst (110) including a delay value (Δ1) indicating the delay until the transmission (S60) of the subsequent burst (111) is started, said method further comprising the step of calculating (S70) a delay for starting said repetitive transmission (S90) of a burst (200) wherein said delay (Δ1.1) being based on said delay value (Δ1) included in the first transmission (S60) of a burst (110).

7. A method according to claim 6, wherein said calculation (S70) is performed based on a fixed rule.

8. A method according to claim 6, wherein said delay (Δ1.1) being a fixed proportion of the delay value (Δ1) included in the first transmission (S60) of a burst (110).

9. A method according to any of claims 1 to 8, wherein each repetitively transmitted burst (200) including data of a further delay value (Δ1.2) indicating a delay until the first transmission (S60) of the subsequent burst (111) is started.

10. A method according to any of claims 1 to 9, wherein said transmission channel (100) including a plurality of consecutive time slots (220), said time slots (120) of said bursts (110, 111) are included therein for transmitting said video, audio, text or data and the remaining time slots (220) serve for independently transmitting additional video, audio, text or data different from the video, audio, text or data of said bursts (110, 111).

11. A method according to any of claims 6 to 8, wherein each repetitively transmitted burst (200) including the delay value (Δ1).

12. A method according to any of claims 1 to 11, wherein each repetitively transmitted burst (200) including an indication of being a repetitive transmission.

13. A method according to claim 12, wherein said indication being included in one of the TBS bits, preferably in bit s48 of the TBS bits.

14. A transmitter for transmitting video, audio, text or data over a transmission channel (100), said transmission channel (100) transmitting said video, audio, text or data in form of a plurality of bursts (110, 111) wherein said bursts (110, 111) are transmitted in intervals on said transmission channel (100)
**characterized in that**
said transmitter repeating a first transmission of a burst (200) within the interval following the first transmission of the burst (110).

15. A transmitter according to claim 14, wherein said repetitively transmitted burst (200) only comprising a portion of the data of the first transmitted burst (110).

16. A transmitter according to claim 15, wherein said data portion essentially corresponding to the duration of the interval between the repetitive transmission of the burst (200) and the first transmission of the subsequent burst (111).

17. A transmitter according to any of claims 14 to 16, wherein said transmitter transmitting the burst (200) at a fixed delay (Δ1.1) after the first transmission of said burst (110).

18. A transmitter according to claim 17, wherein said fixed delay (Δ1.1) being a period of 1 to 3 seconds, preferably a period of 2 to 2.5 seconds.

19. A transmitter according to any of claims 14 to 18, wherein each first transmission of a burst (110) including a delay value (Δ1) indicating the delay until the transmission of the subsequent burst (111) is started, said transmitter further comprising calculating means (220) for calculating a delay (Δ1.1) for starting said repetitive transmission of a burst (200) wherein said delay (Δ1.1) being based on said delay value (Δ1) included in the first transmission of said burst (110).

20. A transmitter according to claim 19, wherein said calculation means (220) perform the calculation of said delay (Δ1.1) based on a fixed rule.

21. A transmitter according to claim 19, wherein said delay (Δ1.1) being a fixed proportion of the delay value (Δ1) included in the first transmission of a burst (110).

22. A transmitter according to any of claims 14 to 21, wherein each repetitively transmitted burst (200) including data of a further delay value (Δ1.2) indicating a delay until the first transmission of the subsequent burst (111).

23. A transmitter according to any of claims 14 to 22, wherein said transmission channel (100) including a plurality of consecutive time slots (220), said time slots (120) of said bursts (110, 111) are included therein for transmitting said video, audio, text or data and the remaining time slots (220) serve for independently transmitting additional video, audio, text or data different from the video, audio, text or data of said bursts (110, 111).

24. A transmitter according to any of claims 19 to 21, wherein each repetitively transmitted burst (200) including the delay value (Δ1).

25. A transmitter according to any of claims 14 to 24, wherein each repetitively transmitted burst (200) including an indication of being a repetitive transmission.

26. A transmitter according to claim 25, wherein said indication being included in one of the TBS bits, preferably in bit s48 of the TBS bits.

27. A method for receiving video, audio, text or data from a transmission channel, said transmission channel (100) transmitting said video, audio, text or data in form of a plurality of bursts (110, 111) wherein said bursts (110, 111) are transmitted in intervals on said transmission channel (100), said method comprising the step of extracting (S120) said video, audio, text or data from said transmitted bursts (110, 111)
**characterized in that**
the transmission channel (100) comprises a repetitively transmitted burst (200) within each interval following the first transmission of a burst (110), and
said extraction step (S220) extracts a first burst (110, 200) received upon switching to said transmission channel (100), said first received burst (110, 200) being either the first transmission of a burst (110) or the repetitive transmission of said burst (200).

28. A method according to claim 27, wherein said repetitively transmitted burst (200) only comprising a portion of the data of the first transmitted burst (110).

29. A method according to claim 28, wherein said data portion essentially corresponding to the duration of the interval between the repetitive transmission of the burst (200) and the first transmission of the subsequent burst (111).

30. A method according to any of claims 27 to 29, further comprising the step of determining (S150) whether or not the burst data of a first transmission of a burst (110) contain a data error, wherein said extraction step (S220) further extracting said repetitively transmitted burst (200) upon detecting a data error in the data of said first burst (110).

31. A method according to any of claims 27 to 30, wherein said repetitively transmitted burst (200) being extracted at a fixed delay (Δ1.1) after extraction of the first transmission of said burst (110).

32. A method according to claim 31, wherein said fixed delay (Δ1.1) being a period of 1 to 3 seconds, preferably a period of 2 to 2.5 seconds.

33. A method according to any of claims 27 to 29, wherein each first transmitted burst (110) including a delay value (Δ1) indicating the delay until the start of the subsequent burst (111), said method further comprising the step of calculating (S200) the delay (Δ1.1) for starting the extraction of said repetitively transmitted burst (200) based on the delay value (Δ1) obtained from the first transmission of said extracted burst (110).

34. A method according to claim 33, wherein said calculation (S200) is performed based on a fixed rule.

35. A method according to claim 33, wherein said delay (Δ1.1) being a fixed proportion of the delay value (Δ1) included in the first transmission of a burst (110).

36. A method according to any of claims 27 to 35, wherein each repetitively repetitive burst (200) including data of a further delay value (Δ1.2) indicating a delay for extracting (S120) the first transmitted subsequent burst (111).

37. A method according to any of claims 27 to 36, wherein said transmission channel (100) including a plurality of consecutive time slots (220), said time slots (120) of said bursts (110, 111) are included therein for transmitting said video, audio, text or data and the remaining time slots (220) serve for independently transmitting additional video, audio, text or data different from the video, audio, text or data of said bursts (110,111).

38. A method according to any of claims 31 to 35, wherein each repetitively transmitted burst (200) including the delay value (Δ1).

39. A method according to any of claims 27 to 38, wherein each repetitively transmitted burst (200) including an indication of being a repetitive transmission.

40. A method according to claim 39, wherein said indication being included in one of the TBS bits, preferably in bit s48 of the TBS bits.

41. A receiver for receiving video, audio, text or data from a transmission channel (100), said transmission channel (100) transmitting said video, audio, text or data in form of a plurality of bursts (110, 111) wherein said bursts (110, 111) are transmitted in intervals on said transmission channel (100), said receiver being adapted to extract said video, audio, text or data from said transmitted bursts (110, 111)
**characterized in that**
the transmission channel (100) comprises a repetitively transmitted burst (200) within each interval following the first transmission of a burst (110), and
said receiver being further adapted to extract a first burst (110, 200) received upon switching to said transmission channel (100), said first received burst (110, 200) being either the first transmission of a burst (110) or the repetitive transmission of said burst (200).

42. A receiver according to claim 41, wherein said repetitively transmitted burst (200) only comprising a portion of the data of the first transmitted burst (110).

43. A receiver according to claim 42, wherein said data portion essentially corresponding to the duration of the interval between the repetitive transmission of the burst (200) and the first transmission of the subsequent burst (111).

44. A receiver according to any of claims 41 to 43, wherein said receiver being further adapted to determine whether or not the burst data of a first transmitted burst (110) contain a data error, wherein said receiver further extracting said repetitively transmitted burst (200) upon detecting a data error in the data of said first burst (110).

45. A receiver according to any of claims 41 or 44, wherein said repetitively transmitted burst (200) being extracted at a fixed delay (Δ1.1) after extraction of the first transmission of said burst (110).

46. A receiver according to claim 45, wherein said fixed delay (Δ1.1) being a period of 1 to 3 seconds, preferably a period of 2 to 2.5 seconds.

47. A receiver according to any of claims 41 to 46, wherein each first transmitted burst (110) including a delay value (Δ1) indicating the delay until the start of the subsequent burst (111), said receiver being further adapted to calculate the delay (Δ1.1) for starting the extraction of said repetitively transmitted burst (200) based on the delay value (Δ1) obtained from the first transmission of said burst (110).

48. A receiver according to claim 47, wherein said calculation is performed based on a fixed rule.

49. A receiver according to claim 47, wherein said delay (Δ1.1) being a fixed proportion of the delay value (Δ1) included in the first transmission of a burst (110).

50. A receiver according to any of claims 41 to 49, wherein each repetitively repetitive burst (200) including data of a further delay value (Δ1.2) indicating a delay for extracting the first transmitted subsequent burst (111).

51. A receiver according to any of claims 41 to 50, wherein said transmission channel (100) including a plurality of consecutive time slots (220), said time slots (120) of said bursts (110, 111) are included therein for transmitting said video, audio, text or data and the remaining time slots (220) serve for independently transmitting additional video, audio, text or data different from the video, audio, text or data of said bursts (110, 111).

52. A method according to any of claims 47 to 49, wherein each repetitively transmitted burst (200) including the delay value (Δ1).

53. A method according to any of claims 41 to 52, wherein each repetitively transmitted burst (200) including an indication of being a repetitive transmission.

54. A method according to claim 53, wherein said indication being included in one of the TBS bits, preferably in bit s48 of the TBS bits.
